# EUROPÄISCHE PATENTANMELDUNG

(11) **EP 4 737 338 A1**
(43) Veröffentlichungstag der Anmeldung: **06.05.2026**
(21) Anmeldenummer: 25208643.4
(22) Anmeldetag: 14.10.2025
(51) Int. Cl.: B65C 9/00, B29C 31/00, B65B 59/04, B67C 3/22

(54) **MASCHINENKONFIGURATION UND VERFAHREN ZUM LOKALISIEREN VON FORMATTEILEN**

(30) Priorität: 04.11.2024 DE 102024131999
(71) Anmelder: Krones Aktiengesellschaft, 93073 Neutraubling (DE)
(72) Erfinder: KIRZINGER, Johannes, 93073 Neutraubling (DE); OBERHOLZNER, Dominik, 93073 Neutraubling (DE)
(74) Vertreter: Benninger, Johannes

(57) **Zusammenfassung**

Es ist eine Maschinenkonfiguration (10) offenbart, die wenigstens eine Behälterbehandlungsanlage (12) und mindestens ein der Behälterbehandlungsanlage (12) zugehöriges Formatteil (16) sowie einen Aufbewahrungsraum (20) zur temporären und ungeordneten Ablage des mindestens einen Formatteils (16) umfasst.

Das mindestens eine Formatteil (16) ist mit einem Ortungsmodul (24) ausgestattet, welches das Lokalisieren des Formatteils (16) innerhalb des Aufbewahrungsraumes (20) mittels drahtlos übertragenen Datenaustausches (26) erlaubt.

Es ist außerdem ein Verfahren zum Lokalisieren von mindestens einem entfernt von einer Behälterbehandlungsanlage (12) befindlichen und der Behälterbehandlungsanlage (12) zugehörigen Formatteil (16) offenbart, wobei sich das mindestens eine Formatteil (16) in ungeordneter Ablage innerhalb eines Aufbewahrungsraumes (20) befinden, und wobei das mindestens eine Formatteil (16) mit einem Ortungsmodul (24) ausgestattet ist, welches das Lokalisieren des Formatteils (16) innerhalb des Aufbewahrungsraumes (20) mittels drahtlos übertragenen Datenaustausches (26) erlaubt.

## Beschreibung

Die vorliegende Erfindung betrifft eine Maschinenkonfiguration, umfassend wenigstens eine Behälterbehandlungsanlage und mindestens ein der Behälterbehandlungsanlage zugehöriges Formatteil und/oder mindestens einen der Behälterbehandlungsanlage zugehörigen Garniturenwagen mit Formatteilen sowie einen Aufbewahrungsraum zur temporären Ablage des mindestens einen Formatteils und/oder des mindestens einen Garniturenwagens mit Formatteilen. Die vorliegende Erfindung betrifft zudem ein Verfahren zum Lokalisieren von mindestens einem entfernt von einer Behälterbehandlungsanlage befindlichen und der Behälterbehandlungsanlage zugehörigen Formatteil und/oder von mindestens einem entfernt von der Behälterbehandlungsanlage befindlichen und der Behälterbehandlungsanlage zugehörigen Garniturenwagen mit Formatteilen.

Es gibt zahlreiche industrielle Anwendungen mit Handhabungs-, Förder- oder Bearbeitungsmaschinen, bei denen Handhabungs- oder Bearbeitungswerkzeuge jeweils spezifischen Anwendungen zu dienen haben und hierfür ausgestattet und ausgebildet sind. Darüber hinaus werden bei vielen maschinellen Anwendungen, insbesondere in Bereichen des Stückguttransports und der Handhabung von Stückgütern, sog. spezifische Formatteile eingesetzt, die bei einer Umrüstung der Maschine gegen jeweils passende andere Formatteile ausgewechselt werden können. Diese Wechselvorgänge können insbesondere dann in automatisierter Weise durchgeführt werden, wenn sowohl an den Formatteilen als auch anderen Verankerungspunkten an der Maschine jeweils geeignete Kupplungen vorhanden sind, die einen solchen automatisierten Wechsel in kurzer Zeit erlauben.

Derartige Wechselvorgänge von Formatteilen können bspw. bei Verpackungsmaschinen sinnvoll sein, bei denen zur Handhabung und/oder Verpackung unterschiedlich dimensionierter Verpackungsprodukte oder auch zur Handhabung und/oder Verpackung ganz unterschiedlich geformter oder generell unterschiedlich gearteter Verpackungsprodukte jeweils anders ausgestattete, anders gestaltete und/oder abweichend dimensionierte Formatteile einzusetzen sind. Um für unterschiedliche transportierte und/oder gehandhabte Produktgruppen jeweils passende Formatteile verfügbar zu halten, kann einer solchen Verpackungsmaschine ein Magazin zur Aufbewahrung und zur Verfügbarmachung mehrerer Formatteile zugeordnet sein, wobei dieses Magazin bspw. über geeignete Transportmechanismen verfügen kann, um bspw. einem jeweils in eine Bereitstellungsposition gefahrenen Werkzeugkopf die jeweils benötigten Formatteile anbieten zu können, nachdem ein jeweils nicht mehr benötigtes Formatteil vorzugsweise zuvor an einen hierfür bereitgehaltenen Ablageplatz im Magazin überführt wurde.

**In** ähnlicher Weise können die Formatteile auch mittels hierfür speziell ausgestatteter Garniturenwagen bereitgehalten und je nach Bedarf gewechselt werden. Die Garniturenwagen sind insbesondere dafür geeignet, mindestens ein Formatteil in eine Übernahmeposition zu bringen, so dass dieses jeweils benötigte Formatteil an einen hierfür ausgestatteten Werkzeugkopf angekoppelt oder in eine vorgesehene Einbauposition gebracht werden kann. Ebenso kann ein Garniturenwagen bereitgehalten werden, um ein nicht mehr benötigtes Formatteil vom Werkzeugkopf oder von der zuvor eingenommenen Einbauposition zu übernehmen, nachdem es von dort entkoppelt wurde, so dass der Garniturenwagen an einen definierten Magazinplatz verbracht werden kann, um für einen erneuten Einsatz zu einem späteren Zeitpunkt verfügbar gehalten zu werden. Ggf. können solche Garniturenwagen auch zur Aufnahme von zwei oder mehr unterschiedlichen oder gleichen Formatteilen vorgesehen sein, so dass bspw. zwei oder mehr Werkzeugköpfe gleichzeitig mit neuen Formatteilen ausgestattet oder von ihren jeweils nicht mehr benötigten Werkzeugköpfen befreit werden können.

Diese hier beschriebenen unterschiedlichen Systeme beruhen darauf, dass die auszutauschenden Werkzeuge, Formatteile oder Garniturenwagen in definierten Aufbewahrungsplätzen bereitgehalten und bei Nichtverwendung auch jeweils in definierten Plätzen abgelegt und aufbewahrt werden, wobei diese Aufbewahrungsplätze in aller Regel durch ein in passender Weise organisiertes Magazin zur Verfügung gestellt werden. Ein solches Magazin benötigt zudem geeignete Schnittstellen, damit ein geordneter Austausch der Werkzeuge, Formatteile oder Garniturwagen stattfinden kann. An diesen Schnittstellen kann entweder durch entsprechend ausgestattete Werkzeugköpfe ein gesteuerter und insbesondere automatisierter Werkzeugwechsel bzw. ein Austausch der Formatteile stattfinden, wobei auch das Magazin selbst über geeignete Transportmittel verfügen kann, um die Werkzeuge oder Formatteile von weiter entfernten Ablageplätzen zu einem Bereitstellungsplatz zu überführen, wo sie vom Werkzeugkopf übernommen und für ihren Einsatz dort angekoppelt werden können, oder wo sie in eine vorgesehene Einbauposition gebracht werden können.

Der Werkzeug- oder Formatteilewechsel kann wahlweise durch zusätzliche Einrichtungen unterstützt werden, etwa unter Einsatz von ortsfesten oder ortsveränderlichen Robotern, die in einer Weise programmiert sein können, um die jeweils benötigten Werkzeuge oder Formatteile von der Einbauposition an einer Maschine oder von einem Werkzeugkopf zu übernehmen und in ein benachbartes oder entferntes Magazin zu überführen, sowie um von dort Werkzeuge oder Formatteile zu entnehmen und dem Werkzeugkopf der Handhabungs-, Werkzeug- oder Verpackungsmaschine zur Verfügung zu stellen, damit sie dort angekoppelt und bestimmungsgemäß eingesetzt werden können.

Die EP 3 724 817 B1 beschreibt eine Vorrichtung zum Behandeln von unterschiedlichen Verpackungs- oder Behältertypen, wobei als Beispiele für solche Vorrichtungen Behälterfüllmaschinen, Behälterreinigungsmaschinen, Sterilisationsmaschinen, Verpackungsmaschinen, Etikettiermaschinen und Transportvorrichtungen genannt werden. Die Vorrichtung soll mit ersten Vorrichtungsteilen ausgestattet sein, die nicht-behälterspezifisch sind, etwa mit Drehmotoren, Förderbändern, Halte- und Tragelementen für Formatteile etc., deren Anordnung und Ausbildung unabhängig von den behandelten Behältertypen ist. Außerdem soll die Vorrichtung über zweite Vorrichtungsteile verfügen, die behälterspezifisch sind und als Formatteile bezeichnet werden. Diese zweiten Vorrichtungs- oder Formatteile, die z.B. durch Geländer, Zentrierelemente, Halte- und Positionierelemente, formatabhängige Förderaggregate, Transportschnecken etc. gebildet sein können, werden bereits bei der Herstellung mit einer nicht veränderbaren Identifizierungsmarkierung oder Kennung versehen. Als Identifizierungsmarkierungen sollen sich eingeritzte, eingefräste oder eingelaserte Kennungen eignen, die bereits bei der Herstellung der entsprechenden Teile ein- oder aufgebracht werden. Außerdem sollen zumindest einige der zweiten Vorrichtungsteile oder Formatteile mit elektronischen Tags ausgestattet sein, die jeweils über einen Speicherplatz für anwenderspezifische oder behälterspezifische Daten verfügen, was variable Kennungen für die Teile erlaubt, die insbesondere kabellos beschreibbar und lesbar sein sollen. Neben den solchermaßen handhabbaren Zusatzinformationen soll im Wesentlichen verhindert werden, dass falsche Formatteile eingesetzt werden, die nicht zu den zu behandelnden Behältern passen.

Aus der EP 2332 847 B1 ist zudem eine Vorrichtung zum Behandeln von Getränkebehältnissen bekannt, bei der Behälternisse auf einer Transporteinrichtung entlang eines vorgegebenen Transportpfades transportiert werden. Die Vorrichtung verfügt über auswechselbare Formatteile, die jeweils mit Identifikationselementen ausgestattet sind, welche auf RFID-Technologie basieren. Zudem sollen die Formatteile über Positionserfassungseinrichtungen verfügen, welche eine örtliche Position wenigstens eines Elements der Vorrichtung gegenüber dem Formatteil erfasst und ein für diese Position charakteristisches Signal ausgibt. Diese Positionserfassungseinrichtung soll in erster Linie einen falschen Einbau des jeweiligen Formatteils verhindern und einen korrekten Einbau und eine ordnungsgemäße Verriegelung an der Vorrichtung anzeigen.

Damit sind verschiedene Systeme beschrieben, die sich für einen automatisierten Austausch von Formatteilen eignen und die Risiken für eine fehlerhafte Montage eines Formatteils oder für die Montage eines falschen, d.h. für den vorgesehenen Einsatzzweck ungeeigneten, Formatteils reduzieren können. Allerdings können die beschriebenen Austauschvorgänge von Werkzeugen, Formatteilen und/oder Garniturenwagen mit Formatteilen, die zwischen einem Werkzeugkopf oder einer Einbauposition und einem Ablageplatz, insbesondere einem Magazin, stattfinden sollen, nur dann zuverlässig in automatisierter Weise durchgeführt werden, wenn die Ablageplätze exakt definiert sind, da ansonsten keine geordneten Zugriffe und keine störungsfreien Wechselvorgänge zu gewährleisten sind. Sobald dagegen ein erwarteter Ablageplatz für ein benötigtes Werkzeug oder ein benötigtes Formatteil nicht mit dem tatsächlichen Ablageplatz übereinstimmt, kann das betreffende Werkzeug oder das betreffende Formatteil nicht für den Ankoppelvorgang am Werkzeugkopf oder für die Übernahme durch eine Handhabungseinrichtung wie bspw. einem Roboter verfügbar gemacht werden. In diesen Fällen sind manuelle Eingriffe meist unumgänglich, um die Störung zu beheben oder um das System in einer Weise neu zu kalibrieren, dass der tatsächliche Ablageplatz dem Handhabungssystem zur Kenntnis gebracht oder dort neu eingelesen wird.

Angesichts der potentiellen Unwägbarkeiten solcher automatisierten und maschinell durchführbaren Austauschvorgänge von Formatteilen oder Garniturwagen mit Formatteilen, die zwischen einem Ablageplatz wie bspw. einem Magazin und einem Einbauort in einer Verpackungsmaschine oder einem Einsatzort an einem Werkzeugkopf einer Verpackungsmaschine hin und her bewegt werden und vorzugsweise automatisiert am Werkzeugkopf an- und abgekoppelt werden können, kann es als ein vorrangiges Ziel der vorliegenden Erfindung betrachtet werden, ein solches System robuster gegen Störungen zu machen, die insbesondere daraus resultieren können, dass einzelne oder mehrere tatsächliche Ablageplätze für benötigte Formatteile oder Garniturwagen nicht mit den zu erwartenden Ablageplätzen übereinstimmen.

Dieses Ziel wird mit den Gegenständen der unabhängigen Ansprüche erreicht. Merkmale vorteilhafter Ausgestaltungen und Weiterentwicklungen der Erfindung lassen sich den jeweiligen abhängigen Ansprüchen entnehmen.

Zur Erreichung des Ziels schlägt die vorliegende Erfindung eine Maschinenkonfiguration mit den Merkmalen des unabhängigen Anspruchs vor, die wenigstens eine Behälterbehandlungsanlage und mindestens ein der Behälterbehandlungsanlage zugehöriges Formatteil und/oder mindestens einen der Behälterbehandlungsanlage zugehörigen Garniturenwagen mit Formatteilen sowie einen Aufbewahrungsraum zur temporären Ablage des mindestens einen Formatteils und/oder des mindestens einen Garniturenwagens mit Formatteilen umfasst.

Bei der erfindungsgemäßen Maschinenkonfiguration ist weiterhin vorgesehen, dass sich das mindestens eine Formatteil und/oder der mindestens eine Garniturenwagen mit Formatteilen in ungeordneter Ablage innerhalb des Aufbewahrungsraumes befinden. Damit trotz dieser ungeordneten Ablage innerhalb des Aufbewahrungsraumes ein Auffinden der Formatteile und/oder der Garniturenwagen sowie ein Zugriff darauf ermöglicht ist, ist das mindestens eine Formatteil und/oder der mindestens eine Garniturenwagen mit Formatteilen jeweils mit einem Ortungsmodul ausgestattet, welches das Lokalisieren des Formatteils und/oder des Garniturenwagens mit Formatteilen innerhalb des Aufbewahrungsraumes mittels drahtlos übertragenen Datenaustausches erlaubt.

Der hier verwendete Begriff der Behälterbehandlungsanlage darf im vorliegenden Zusammenhang, d.h. im Zusammenhang der gesamten Beschreibung, umfassend verstanden werden. Damit kann jeglicher Abschnitt eines komplexen Maschinensystems gemeint sein, das die Herstellung, Abfüllung, Handhabung, den Transport und/oder die Verpackung von Behältern, insbesondere von Getränkebehälter, betrifft und damit im Zusammenhang steht.

Der hier verwendete Begriff der Behälterbehandlungsanlage kann somit insbesondere auch jegliche Handhabungs- und Transportabschnitte zwischen der Bereitstellung oder Herstellung der Behälter, der Abfüllung von Flüssigkeiten oder Getränken in diese Behälter, deren weitere Handhabung wie bspw. Etikettierung bis hin zur abschließenden Verpackung und/oder Palettierung meinen und begrifflich umfassen bzw. mitumfassen.

Die Behälterbehandlungsanlage kann somit u.a. auch eine Verpackungsmaschine oder ein Verpackungssystem umfassen. Wenn also an irgendeiner Stelle der vorliegenden Beschreibung oder der Ansprüche von einer Behälterbehandlungsanlage die Rede ist, so kann dieser Begriff wahlweise konkreter verstanden und durch den Begriff der Verpackungsanlage, der Verpackungsmaschine oder eines Verpackungssystems für Behälter ersetzt werden, sofern dies in technischer Hinsicht zutrifft. Da auch eine solche Behälterverpackungsanlage, Behälterverpackungsmaschine oder ein solches Behälterverpackungssystem die Definition einer Behälterbehandlungsanlage erfüllt und unter den Begriff einer Behälterbehandlungsanlage fällt, kann wahlweise an jeder Stelle der vorliegenden Beschreibung sowie der Ansprüche der jeweils verwendete Begriff der Behälterbehandlungsanlage durch den Begriff der Verpackungsanlage oder der Behälterverpackungsanlage (oder eines Synonyms hierfür) ersetzt werden.

Auch ist es denkbar, dass ein solches Verpackungssystem eine Füllmaschine zum Befüllen der Getränkebehälter mit einer Flüssigkeit, insbesondere mit einem flüssigen Getränk, umfasst. Das Verpackungssystem kann bspw. dafür vorgesehen und entsprechend ausgestattet sein, um unterschiedliche Verpackungsmittel zu verarbeiten, bspw. durch Aufbringen von thermoplastischem Verpackungsmaterial auf einzelne Behälter oder auf Behältergruppen. Sofern es sich bei einem solchen thermoplastischen Verpackungsmaterial um schrumpfbares Folienmaterial handelt, das unter Wärmeeinwirkung zum Schrumpfen neigt, kann es insbesondere sinnvoll sein, einer hierfür notwendigen Verarbeitungsstation stromabwärts einen Schrumpftunnel folgen zu lassen. Somit kann bei solchen Ausführungsformen das Verpackungssystem einen Schrumpftunnel zum Aufschrumpfen des auf die Behälter bzw. auf die Behältergruppen aufgebrachten thermoplastischen Verpackungsmaterials mittels Wärmeeinwirkung umfassen.

Alternativ oder ergänzend hierzu kann es außerdem sein, dass das Verpackungssystem, das insbesondere Bestandteil der hier genannten Behälterbehandlungsanlage sein kann, eine Maschine zum Aufbringen von Klebeverbindungen auf Behälter bzw. auf Behältergruppen umfasst, über welche Klebeverbindungen mehrere Behälter bzw. mehrere Behältergruppen als Gebinde zusammengefasst werden können. Weitere sinnvolle Arbeitsstation, die alternativ oder zusätzlich einsetzbar sind, können beispielsweise durch Applikationsstationen zum Anbringen von Verpackungszuschnitten und/oder von Umreifungsbändern oder Umreifungsbanderolen an vorbereitete Behältergruppen gebildet sein, die auf diese Weise zu Gebinden oder Verpackungseinheiten weiterverarbeitet werden können. Die genannten Verpackungsvarianten sind nicht einschränkend oder abschließend zu verstehen, so dass wahlweise auch Stretchwickler oder andere Verpackungsmodule eingesetzt werden können.

Alternativ oder ergänzend hierzu kann es sein, dass das Verpackungssystem, das die hier beschriebene Behälterbehandlungsanlage bildet oder die Teil einer solchen Behälterbehandlungsanlage sein kann, eine Gruppierstation umfasst, über die mehrere Behälter, mehrere Behältergruppen oder mehrere Gebinde in eine relative Anordnung zueinander überführbar sind, welche relative Anordnung auf eine aus den mehreren Behältern, den mehreren Behältergruppen oder den mehreren Gebinden zu bildende palettierfähige Lage abgestimmt ist. Eine solche Gruppierstation kann beispielsweise mindestens einen Deltakinematik-Roboter umfassen, der die Behälter, die Behältergruppen oder die mehreren Gebinde in die relative Anordnung überführt, die auf eine aus den mehreren Behältern, den mehreren Behältergruppen oder den mehreren Gebinden zu bildende palettierfähige Lage abgestimmt ist.

Es ist zudem vorstellbar, dass das Verpackungssystem und/oder die Behälterbehandlungsanlage eine Arbeitsvorrichtung umfasst, welche die Behälter, die Behältergruppen oder die Gebinde der bereits gebildeten relativen Anordnung zusammenschiebt und hierdurch eine vollständige palettierfähige Lage ausbildet.

Auch kann es sein, dass das Verpackungssystem eine Palettierstation umfasst, die zum gestapelten Verbringen palettierfähiger Lagen an eine zugeordnete Palette ausgebildet ist. Bei solchen Ausführungsformen kann eine Zuführeinrichtung vorgesehen sein, welche der Palettierstation teil- oder vollautonom Paletten zum gestapelten Anordnen mehrere palettierfähiger Lagen bereitstellt.

Alle diese genannten Maschinenkomponenten oder Unterbaugruppen können eine solche Behälterbehandlungsanlage bilden, wie sie hier beschrieben ist. Alle diese genannten Maschinenkomponenten oder Unterbaugruppen können wahlweise auch Teilkomponenten einer solchen Behälterbehandlungsanlage sein, wie sie sich hier beschrieben findet.

Außerdem soll mit der Definition mindestens einer Behälterbehandlungsanlage als Bestandteil der erfindungsgemäßen Maschinenkonfiguration nicht ausgeschlossen sein, dass diese Maschinenkonfiguration mehrere solcher Behälterbehandlungsanlagen umfassen kann. Somit eignet sich die vorliegende Erfindung auch dafür, Formatteile und/oder Garniturenwagen mit Formatteilen zwischen zwei Standorten von Behälterbehandlungsanlagen auszutauschen und die jeweils für einen Austausch bzw. für eine Montage an einen Standort benötigten Formatteile bzw. Garniturenwagen wahlweise auch am anderen Standort zu suchen und im Idealfall zu lokalisieren, um sie zum jeweils benötigten anderen Standort zu verbringen.

Wenn im vorliegenden Zusammenhang zudem von Formatteilen gesprochen wird, so können damit insbesondere solche Maschinenteile gemeint sein, die behälterspezifische Aufgaben erfüllen und deshalb oftmals auswechselbar ausgestaltet sein müssen, um die Behälterbehandlungsmaschine an unterschiedliche Behälterformen, Behälterdimensionen und/oder Behältertypen anpassen zu können, soll die Maschine in die Lage versetzt sein, nicht nur einen einzigen Behältertyp handhaben zu können, sondern unterschiedliche Behältertypen. Solche Formatteilen können typischerweise Geländerabschnitte, Zentrierelemente, Halte- und Positionierelemente, formatabhängige Förderaggregate wie bspw. Transportbänder, Horizontalfördereinrichtungen, Förderschnecken etc. sein.

Solche behälterspezifischen Formatteile können jedoch auch Greiferköpfe, Greiferkopfgarnituren und Manipulatoren sein, deren behälterspezifischen Greif- und Handhabungselemente oftmals nicht für unterschiedliche Behältertypen und/oder Behältergrößen geeignet sind und deshalb bei einer Formatumstellung der Maschine oder Anlage, etwa im Zusammenhang mit einem Produktwechsel oder der Verarbeitung von größeren oder kleineren Behältern, ebenfalls ausgetauscht werden müssen.

Um solche Formatteile, die sich in größerer Zahl in ungeordneter Ablage im Bereich des Aufbewahrungsraumes befinden können, nicht nur zuverlässig orten und auffinden, sondern auch aufnehmen und zur Behälterbehandlungsanlage überführen und sie dort am richtigen Einbauort montieren zu können, sieht die Erfindung die oben genannten Ortungsmodule vor, die mittels drahtlosem Datenaustausch eine eindeutige Identifizierung, Lokalisierung und ständige Überwachung bei Ortsveränderungen ermöglichen.

Oftmals werden die Formatteile auch als Sortiment oder als größere Baugruppen zusammengefasst. Zudem ist es für viele Wechselsituationen generell sinnvoll, zusätzliche Hilfsmittel zu verwenden, welche die Wechselvorgänge erleichtern können. Eine Möglichkeit eines solchen Hilfsmittels kann bspw. ein Garniturenwagen sein, worunter im Wesentlichen ein rollbares Gestell oder ein rollbarer Unterbau zur Aufnahme von einzelnen oder von mehreren Formatteilen zu verstehen ist. Ein solcher Garniturenwagen kann somit bspw. ein rollbarer Wagen sein, auf dem und/oder in dem die jeweils aufzubewahrenden und/oder für eine Bereitstellung benötigten Teile, d.h. insbesondere Formatteile und/oder Garnituren mehrerer Formatteile, aufbewahrt werden können, also insbesondere geschützt vor Beschädigungen und ggf. auch vor Verschmutzungen, insbesondere gut zugänglich für einen Zugriff und eine Entnahme vom Garniturenwagen. Dabei kann es sich um eine hängende oder liegende Aufbewahrung handeln.

Es ist zudem nachvollziehbar, dass die Verwendung eines solchen Garniturenwagens für größere und empfindliche Maschinenbaugruppen sinnvoll ist.

Es ist darüber hinaus nachvollziehbar, dass die Verwendung eines solchen Garniturenwagens etwa für Greiferköpfe mit Arealen von Unterdrucksauggreifern oder druckbeaufschlagbaren Packtulpen, die dafür vorgesehen sind, größere Gruppierungen von Behältern aufzunehmen und umzusetzen, sinnvoll ist.

Für diese Garniturenwagen gilt dasselbe wie für die oben erwähnten Formatteile, so dass auch die Garniturenwagen, die zur Aufbewahrung mehrerer Formatteile und/oder zur Aufbewahrung größerer und/oder komplexer Formatteile vorgesehen sind, jeweils mit Ortungsmodulen ausgestattet sind, so dass sie jederzeit lokalisiert und/oder identifiziert werden können, und zwar bedarfsweise auf größere Entfernungen und mittels drahtlos übertragenem Datenaustausch.

Wenn im vorliegenden Zusammenhang von einer Lokalisierung oder Ortung gesprochen wird, so meint dies die Bestimmung einer räumlichen Position eines bestimmten Objektes, im vorliegenden Fall eines Formatteils und/oder eines Garniturenwagens, im Verhältnis zu einem Ausgangspunkt, der im vorliegenden Fall in der Regel durch einen Sender-Empfänger gebildet sein wird. Da es für die hier diskutierte Anwendung irrelevant ist, ob das jeweils zu lokalisierende Objekt eine Rückmeldung für seine jeweilige Ortung erhält oder nicht, kann das Ortungsmodul als passiv arbeitendes Bauteil ausgebildet sein.

Der im vorliegenden Zusammenhang verwendete Begriff des Ortungsmoduls ist grundsätzlich umfassend zu verstehen und meint insbesondere passiv oder aktiv funktionierende Module, die in einen Datenaustausch mit einer Gegenstelle wie einem kombinierten Sender-Empfänger treten können. Da es im vorliegenden Fall im Wesentlichen um die Funktion der Lokalisierung geht, da die ungeordnet abgelegten Formatteile oder Garniturenwagen gefunden werden sollen, spielt die jeweils verwendete Technik eine untergeordnete Rolle. Gleichwohl kommen die unterschiedlichsten Techniken in Frage, etwa ein Datenaustausch mittels RFID-Technik, bei der die Objekte mit einem passiven Transponder ausgestattet sein können, deren Informationen von einem entfernten Lesegerät ausgelesen und zur Gewinnung von Ortungsdaten ausgewertet werden können. Um größere Entfernungen zu überwinden, können wahlweise auch aktive Transponder mit eigener Energieversorgung eingesetzt werden.

Grundsätzlich kommen auch zahlreiche andere Ortungstechniken in Frage, die im Ortungsmodul der hier diskutierten Erfindung eingesetzt werden können, so etwa eine WLAN-basierte Ortung, die ergänzend mit GPS-Techniken arbeiten kann. Hierbei können wechselnde Feldstärken von empfangenen WLAN-Signalen ausgewertet werden. Auch der etablierte Bluetooth-Standard kann als Grundlage für die Ortung der Formatteile oder Garniturenwagen dienen.

Als Ortungsmodule kommen bspw. auch solche Geräte in Frage, die ähnlich wie Schlüsselfinder arbeiten und die einen Datenaustausch mittels der sog. Ultrabreitband-Technik ermöglichen. Die Ortung kann bspw. auf Grundlage von bekannten Anwendungen erfolgen, wie es etwa durch den Technologiestandard "omlox" bereitgestellt wird.

Von Vorteil kann es darüber hinaus sein, wenn zumindest einige der Formatteile und/oder der Garniturenwagen mit den Formatteilen, die sich zumindest temporär im Aufbewahrungsbereich befinden können, mit einer eigenen Energieversorgung sowie mit einem GSM-Modul ausgestattet sind, das mit dem jeweiligen Ortungsmodul des betreffenden Formatteils und/oder Garniturenwagens gekoppelt ist, so dass auf diese Weise eine Lokalisierung der betreffenden Formatteile und/oder der betreffenden Garniturenwagen auf herkömmlicher Mobilfunkbasis möglich ist. Ein solches GSM-Modul kann wahlweise mit einer zugehörigen SIM-Karte ausgestattet sein oder über eine virtuelle SIM-Karte verfügen, so dass nicht nur eine Lokalisierung der betreffenden Formatteile und/oder der betreffenden Garniturenwagen ermöglicht ist, sondern ein umfangreicherer Datenaustausch, was hinsichtlich der ggf. auszutauschenden Daten sowie hinsichtlich der beim Formatteil bzw. beim Garniturenwagen gespeicherten und für den Datenaustausch bereitgehaltenen Daten nachfolgend noch näher erläutert wird.

Nicht alle im Aufbewahrungsraum befindlichen Formatteile oder Garniturenwagen müssen mit einem solchen GSM-Modul ausgestattet sein, da es manche Formatteile geben wird, für die eine solche zusätzliche Datenhaltung, -speicherung und Datenübertragungsmöglichkeit via Funk- bzw. Mobilfunkverbindung nicht notwendig ist. Doch für einige der Formatteile und/oder Garniturenwagen kann eine solche ergänzende Funktionalität sinnvoll sein.

Es sei außerdem an dieser Stelle klargestellt, dass die Verwendung des Begriffes der Behälterbehandlungsanlage impliziert, dass die erfindungsgemäße Maschinenkonfiguration mit dem Handling von Behältern befasst ist. Wenn somit im vorliegenden Zusammenhang von Behältern gesprochen wird, die mittels der Behälterbehandlungsanlage als Bestandteil der erfindungsgemäßen Maschinenkonfiguration behandelt, gehandhabt, transportiert etc. werden, so können dies die unterschiedlichsten Behältervarianten sein, seien dies Flaschen aus Kunststoff oder aus Mineralglas, Dosen aus Metallblech, aus Kunststoff oder aus Verbundmaterial, Flaschen aus einem organischen Material, insbesondere aus einem zellulosehaltigen Material oder Verbundmaterial, Behälter aus einem Verbundmaterial, beschichtete Behälter, Dosen etc.

Bei der erfindungsgemäßen Maschinenkonfiguration kann der hier so bezeichnete Aufbewahrungsraum insbesondere durch ein räumlich umgrenztes und/oder ein räumlich definiertes Areal gebildet sein, das sich in einer definierten räumlichen Beziehung zur Behälterbehandlungsanlage befindet, wobei die definierte räumliche Beziehung insbesondere eine unmittelbare Umgebung mit bestimmbarem maximalem Entfernungsradius zur Behälterbehandlungsanlage meint. So kann der Aufbewahrungsraum bspw. ein Magazin sein, in dem die Formatteile oder die Garniturenwagen in geordneter Ablage deponiert und für eine Verwendung an der Behälterbehandlungsanlage bereitgestellt und verfügbar gehalten werden können.

Der Aufbewahrungsraum kann jedoch auch ein größeres Areal umfassen, als es der umgrenzte Raum eines Magazins sein kann. Wahlweise kann der Aufbewahrungsraum auch ein solches Areal umfassen, das lediglich durch die Funkreichweite der drahtlosen Datenverbindung zwischen den jeweiligen Ortungsmodulen der Formatteile und/oder Garniturenwagen und einer mit diesen Ortungsmodulen kommunizierenden Gegenstelle begrenzt sein muss. Wenn die drahtlosen Datenverbindungen zwischen den Ortungsmodulen der Formatteile und/oder Garniturenwagen und der damit kommunizierenden Gegenstelle es erlauben, können die Formatteile und/oder Garniturenwagen grundsätzlich auch an weit von der Behälterbehandlungsanlage entfernten Ablageplätzen liegen, da bei Kenntnis ihres Ablageortes ein Zugriff ermöglicht ist, bspw. mittels eines hierfür entsprechend ausgestatteten Hilfsmittels, das die lokalisierten Formatteile und/oder Garniturenwagen bei Bedarf aufgreifen und an die Behälterbehandlungsanlage überführen bzw. dorthin transportieren kann.

**Im** vorliegenden Zusammenhang kann es bspw. sinnvoll sein, die Formatteile und/oder die Garniturenwagen mit Formatteilen in einem Bereich von bis zu etwa einem Kilometer lokalisieren zu können, was eine entsprechende technische Ausstattung und eine Sicherstellung entsprechender Reichweiten für einen drahtlosen Datenaustausch zwischen dem mindestens einen Ortungsmodul und dem normalerweise ortsfest angeordneten Sender-Empfänger voraussetzt. Ggf. kann diese Reichweite durch Nutzung eines fahrerlosen Transportfahrzeuges als reichweitenverlängernde Relaisstation deutlich vergrößert werden. Vorzugsweise liegt die Reichweite für eine Lokalisierung in einer Größenordnung von mindestens 100 Metern um den ortfesten Sender-Empfänger. Damit ist gemeint, dass das abgelegte Formatteil und/oder der abgestellte Garniturenwagen zumindest innerhalb einer solchen Reichweite von vorzugsweise ca. 100 Metern zuverlässig lokalisiert werden kann.

Durch die erfindungsgemäß eröffnete Möglichkeit der ungeordneten Ablage von Formatteilen und Garniturenwagen innerhalb des Aufbewahrungsraumes können diese Formatteile und/oder Garniturenwagen wahlweise auch weit verstreut und sowohl hinsichtlich ihres Aufbewahrungsortes als auch hinsichtlich ihrer Lage und/oder Orientierung im Raum fast beliebig abgelegt sein, denn das Ortungsmodul ermöglicht es, die solchermaßen ohne festes System oder ohne feste Ordnung aufbewahrten Formatteile und/oder Garniturenwagen zu orten, aufzufinden und von hierfür geeigneten Einrichtungen aufzunehmen und ihrer vorgesehenen Verwendung an der Behälterbehandlungsanlage zuzuführen.

So kann bei der erfindungsgemäßen Maschinenkonfiguration eine ungeordnete Ablage des mindestens einen Formatteils und/oder des mindestens einen Garniturenwagens mit Formatteilen bspw. eine nicht mit definierten Ablageroutinen übereinstimmende Ablage und/oder eine fehlerhafte Ablage und/oder eine chaotische Ablage und/oder eine nachträglich veränderte Ablage des mindestens einen Formatteils und/oder des mindestens einen Garniturenwagens mit Formatteilen innerhalb des Aufbewahrungsraumes meinen.

Mehrfach wird von einer ungeordneten Ablage des mindestens einen Formatteils und/oder des mindestens einen Garniturenwagens mit Formatteilen gesprochen, was grundsätzlich auch eine chaotische und keinerlei Ordnungskriterien genügende Ablage der entsprechenden Teile umfassen kann.

Darüber hinaus erlaubt es die erfindungsgemäße Maschinenkonfiguration, diese grundsätzlich zugelassene ungeordnete Ablage einzelner Formatteile oder mehrerer Formatteile und/oder des mindestens einen Garniturenwagens bzw. mehrerer Garniturenwagen mit Formatteilen immer wieder erneut dadurch in eine Ordnung zurückzuführen, dass jedes dieser ungeordnet abgelegten Formatteile oder jeder dieser ungeordnet abgelegter Garniturenwagen an jedem seiner jeweiligen Ablageorte erneut lokalisiert werden kann, so dass die Ortbarkeit und insbesondere die wiederholte Ortbarkeit der Formatteile und/oder Garniturenwagen eine beliebige Wiederholbarkeit einer jeweiligen ungeordneten Ablage zulässt, und zwar unabhängig davon, ob dasselbe Formatteil bzw. derselbe Garniturenwagen bei einer späteren Ablage denselben Ablageort erhält oder nicht.

Damit ist klargestellt, dass jedes einzelne Formatteil sowie jeder einzelne Garniturenwagen für jeden Handhabungszyklus immer wieder erneut ungeordnet abgelegt werden kann und dennoch aufgrund seines jeweiligen Ortungsmoduls immer wieder zu lokalisieren ist, und zwar unabhängig von dem für den einzelnen Handhabungszyklus gewählten oder sich zufällig ergebenden Ablageort.

Wenn an dieser Stelle von einem Handhabungszyklus gesprochen wird, so meint dies einen Einsatz eines zuvor von der Behälterbehandlungsanlage getrennten und für eine spätere Verwendung in den Aufbewahrungsraum überführten Formatteils und/oder Garniturenwagens mit Formatteilen, das nun für seine Verwendung an oder in der Behälterbehandlungsanlage lokalisiert werden muss, um es zur Behälterbehandlungsanlage für seinen dortigen Einsatz verbringen zu können.

Eine vorteilhafte Ausführungsvariante der erfindungsgemäßen Maschinenkonfiguration kann weiterhin mindestens ein innerhalb des umgrenzten oder nicht umgrenzten Aufbewahrungsraumes bewegliches und seinen Aufenthalt veränderbares fahrerloses Transportfahrzeug oder AGV umfassen, welches die Lokalisierung des jeweiligen Formatteils und/oder des jeweiligen Garniturenwagens mit Formatteilen unterstützen oder ausführen kann.

Wenn im vorliegenden Zusammenhang von einem fahrerlosen Transportfahrzeug gesprochen wird, so ist auch dieser Begriff zumindest geringfügig umfassender zu verstehen, als es die übliche Begriffsverwendung vorgibt, denn unter einem AGV (Automated Guided Vehicle) oder einem FTF (fahrerloses Transport-Fahrzeug) wird in aller Regel ein flurgebundenes Fördermittel verstanden, das über einen eigenen Fahrantrieb verfügt und das automatisch gesteuert und berührungslos geführt wird, insbesondere zum Zweck des Materialtransports, zum Ziehen oder zum Tragen von Fördergut, wobei aktive oder passive Lastaufnahmemittel vorhanden sein können.

Alle diese Charakteristika können auch der hiesigen Begriffsverwendung zugrunde gelegt werden, mit Ausnahme der Flurgebundenheit und ggf. mit Ausnahme der Einschränkung auf ein Fahrzeug, denn das fahrerlose Transportfahrzeug gemäß hiesiger Begrifflichkeit soll nicht zwingend der Flurgebundenheit unterliegen, da gemäß obiger Definition die möglichen Aufbewahrungsorte für die zu lokalisierenden Formatteile oder des jeweils zu lokalisierenden Garniturenwagens auch sehr weit von der Behälterbehandlungsanlage entfernt sein können, was die Möglichkeit einschließt, dass ein solcher Aufbewahrungsort keine definierte Wegstrecke zur Behälterbehandlungsanlage inkludiert, so dass unter Umständen Hindernisse für das Transportfahrzeug zu überwinden sind, die nicht mehr Teil eines umgrenzten Areals oder Flurs im Sinne der üblichen Definition von FTF oder AGV sind.

Hinzukommen kann ggf. die Option, dass das fahrerlose Transportfahrzeug gemäß der hier bevorzugten Definition wahlweise auch keiner Einschränkung auf einen reinen Radtransport unterliegen muss, sondern dass auch kombinierte Fortbewegungsarten, etwa mittels beweglicher Stelzen, mittels Gurtbandlaufwerken etc., insbesondere zur Überwindung von Hindernissen oder unwegsamen Streckenabschnitten, denkbar sind, die im vorliegenden Fall ebenfalls von der hier gewählten Begrifflichkeit des fahrerlosen Transportfahrzeuges mitumfasst sein sollen.

Bei einer weiteren Ausführungsvariante einer solchen Maschinenkonfiguration kann das fahrerlose Transportfahrzeug, welches das Formatteil und/oder den Garniturenwagen mit Formatteilen lokalisiert hat, zur Aufnahme und zur Verbringung des lokalisierten Formatteils und/oder des lokalisierten Garniturenwagens mit Formatteilen vom Ort seiner Ablage innerhalb des umgrenzten oder nicht umgrenzten Aufbewahrungsraumes zur Behälterbehandlungsanlage vorbereitet und entsprechend ausgestattet sein. Ein solches fahrerloses Transportfahrzeug kann bspw. mit aktiven Lastaufnahmemitteln ausgestattet sein, damit die beförderten Formatteile oder Garniturenwagen auf einen Laderaum des Fahrzeuges übernommen und von dort abgenommen werden können, oder damit das fahrerlose Transportfahrzeug mit dem Garniturenwagen gekoppelt werden kann, um diesen zum Bestimmungsort zu ziehen.

Wahlweise kann bei der erfindungsgemäßen Maschinenkonfiguration ein weiteres fahrerloses Transportfahrzeug, welches nicht dasjenige ist, welches das Formatteil und/oder den Garniturenwagen mit Formatteilen lokalisiert hat, zur Aufnahme und zur Verbringung des vom anderen fahrerlosen Transportfahrzeug lokalisierten Formatteils und/oder des lokalisierten Garniturenwagens mit Formatteilen vom Ort seiner Ablage innerhalb des Aufbewahrungsraumes zur Behälterbehandlungsanlage vorbereitet und entsprechend ausgestattet sein.

Ein solches zusätzliches fahrerloses Transportfahrzeug oder AGV kann somit nicht nur entfernt von der Behälterbehandlungsanlage bzw. von der Maschinenkonfiguration abgelegte Formatteile und/oder Garniturenwagen mit Formatteilen suchen und lokalisieren, sondern kann ggf. auch diese gesuchten Formatteile und/oder Garniturenwagen mit Formatteilen an einem zweiten, dritten oder weiteren Standort oder Produktionsort derselben oder einer weiteren Maschinenkonfiguration suchen und lokalisieren, bspw. an einer weiteren Behälterbehandlungsanlage, wie sie oben schon erwähnt und als Bestandteil der Maschinenkonfiguration oder einer weiteren Maschinenkonfiguration definiert wurde.

In diesem Zusammenhang kann ein zusätzliches fahrerloses Transportfahrzeug oder können ggf. mehrere solcher fahrerlosen Transportfahrzeuge auch als Relaisstationen zur Erhöhung der Suchreichweite genutzt werden, da davon ausgegangen werden kann, dass die üblicherweise eingesetzten Ortungsmodule eine begrenzte Reichweite haben, die technisch bedingt ist. Somit kann im Einzelfall dem Nachteil dieser technisch bedingten begrenzten Reichweite, die den Datenaustausch zwischen einem Sender-Empfänger und den jeweiligen Ortungsmodulen dadurch begegnet werden, dass mittels des Einsatzes von reichweitenverlängernden fahrerlosen Transportfahrzeugen auch weiter entfernt von einem ortsfesten Sender-Empfänger abgelegte Formatteile und/oder Garniturenwagen mit Formatteilen lokalisiert und gefunden werden können. Wie schon weiter oben erwähnt, bildet ein solcher Sender-Empfänger normalerweise eine Gegenstelle für den Datenaustausch mit den Ortungsmodulen, so dass durch die Nutzung von fahrerlosen Transportfahrzeugen als Relaisstationen eine Vergrößerung des Such- und Lokalisationsradius erzielt werden kann.

Von Vorteil kann bei der erfindungsgemäßen Maschinenkonfiguration weiterhin sein, wenn zumindest einige, vorzugsweise jedoch alle mit einem Ortungsmodul ausgestatteten Formatteile und/oder alle mit einem Ortungsmodul ausgestatteten Garniturenwagen mit Formatteilen zentral erfasst und zumindest ihre Ortungsdaten mittels einer zentralen Datenverarbeitung verwaltet, gespeichert und abrufbar bereitgehalten werden können.

So kann eine Ausführungsvariante der erfindungsgemäßen Maschinenkonfiguration insbesondere mit einer Steuerungszentrale ausgestattet oder gekoppelt sein. Eine solche Steuerungszentrale kann typischerweise mit der Behälterbehandlungsanlage gekoppelt sein und mit zahlreichen Steuerungs- und/oder Überwachungsaufgaben betraut sein. Auch wenn an dieser Stelle nur ganz allgemein von einer Steuerungszentrale gesprochen wird, so kann es sich dabei wahlweise um einen modular aufgebauten und mehrere räumlich voneinander getrennte, aber über Datenverbindungen miteinander kommunizierende Steuerungsmodule umfassenden Verbund handeln. Die Steuerungszentrale und/oder ihre mehreren Steuerungsmodule können bspw. durch SPS-Bausteine gebildet sein oder solche SPS-Bausteine umfassen.

Diese Steuerungszentrale, die insbesondere auch als Teil der Maschinenkonfiguration betrachtet werden kann, verfügt vorzugsweise über eine zentrale Datenverarbeitung, welche dazu in der Lage und entsprechend konfiguriert ist, um eine zentrale Erfassung, Verwaltung und/oder Speicherung zumindest der Ortungsdaten zumindest einiger, vorzugsweise aller mit einem Ortungsmodul ausgestatteten Formatteile und/oder einiger, vorzugsweise aller mit einem Ortungsmodul ausgestatteten Garniturenwagen mit Formatteilen zu ermöglichen.

Darüber hinaus kann die zentrale Datenverarbeitung der Steuerungszentrale wahlweise dafür genutzt werden, um zumindest einige der mit einem Ortungsmodul ausgestatteten Formatteile und/oder zumindest einige der mit einem Ortungsmodul ausgestatteten Garniturenwagen mit Formatteilen zu steuern, ggf. unter Nutzung zusätzlicher Hilfsmittel wie insbesondere der erwähnten fahrerlosen Transportfahrzeuge und/oder von mobilen Robotern etc. Die Steuerungszentrale kann bspw. über eine SPS-Steuerung verfügen, die zahlreiche Anlagenfunktionen steuert und überwacht.

In diesem Zusammenhang kann es zudem von Vorteil sein, wenn auch fest verbaute Maschinenteile der Behälterbehandlungsanlage und/oder der erfindungsgemäßen Maschinenkonfiguration mit Ortungsmodulen gemäß hiesiger Definition ausgestattet werden, da dies bei allen betreffenden Maschinenteilen eine vorteilhafte Ortungs- und ggf. sogar Lageerkennungsfunktion ermöglicht, was für die erstmalige Installation der Anlage wichtig sein kann. Außerdem kann eine solche zusätzliche Ausstattung von fest verbauten Maschinenteilen mit Ortungsmodulen im Falle einer Reparatur und/oder eines verschleißbedingten und/oder eines modernisierungsbedingten Austauschs solcher Maschinenteile einen Vorteil bieten. Auch für diese zusätzliche Ausstattungsoption kann es von Vorteil sein, wenn die Lokalisierungsdaten und/oder weitere Parameterdaten der betreffenden Maschinenteile zentral erfasst und verwaltet werden.

Wahlweise oder zusätzlich kann bei der erfindungsgemäßen Maschinenkonfiguration vorgesehen sein, dass zumindest die Ortungsdaten der mit einem Ortungsmodul ausgestatteten Formatteile und/oder der mit einem Ortungsmodul ausgestatteten Garniturenwagen mit Formatteilen mittels wenigstens eines mobilen Endgerätes erfasst und/oder verwaltet, gespeichert und abrufbar bereitgehalten werden können, insbesondere zur Visualisierung für einen Benutzer des mobilen Endgerätes. Hierbei kann es sinnvoll sein, wenn die erfindungsgemäße Maschinenkonfiguration mit wenigstens einem mobilen Endgerät gekoppelt werden kann, wobei dieses wenigstens eine mobile Endgerät zur Erfassung, Verwaltung, Speicherung und/oder zur Bereitstellung zumindest der Ortungsdaten der mit einem Ortungsmodul ausgestatteten Formatteile und/oder der mit einem Ortungsmodul ausgestatteten Garniturenwagen mit Formatteilen vorgesehen und entsprechend ausgestattet sowie konfiguriert sein kann. Auf diese Weise kann ein Benutzer unter Verwendung eines solchermaßen konfigurierten und ausgestatteten mobilen Endgerätes auf zahlreiche Maschinendaten zugreifen und/oder einzelne Maschinenfunktionen steuern, bspw. das Auffinden von Formatteilen und/oder das Austauschen von Formatteilen gegen andere Formatteile etc.

Diese Erfassung und/oder Anzeige von Parameter- und/oder Ortungsdaten von Maschinenteilen, Formatteilen und/oder Garniturenwagen mittels mobiler Endgeräte kann sich zudem auch auf die oben erwähnten fest verbauten Maschinenteile beziehen.

Wahlweise oder zusätzlich kann bei der erfindungsgemäßen Maschinenkonfiguration vorgesehen sein, dass auch die Steuerungsdaten und/oder Ortungsdaten der innerhalb der Maschinenkonfiguration eingesetzten und zum Auffinden und/oder zur Handhabung der Formatteile bzw. der Garniturenwagen mit Formatteilen sinnvoll einsetzbaren fahrerlosen Transportfahrzeuge mittels wenigstens eines mobilen Endgerätes erfasst und/oder verwaltet, gespeichert und abrufbar bereitgehalten werden können, insbesondere zur Visualisierung für einen Benutzer des mobilen Endgerätes. Das mobile Endgerät kann wahlweise dasselbe sein, wie es oben als optionale Ausstattung zur Koppelung mit der Maschinenkonfiguration genannt wurde, und zwar im Zusammenhang mit der Handhabung der Ortungsdaten der Formatteile oder Garniturenwagen.

Bei einer optionalen Koppelung der erfindungsgemäßen Maschinenkonfiguration mit wenigstens einem mobilen Endgerät, das zur Erfassung, Verwaltung, Speicherung und/oder zur Bereitstellung zumindest der Ortungsdaten und/oder Steuerungsdaten für die fahrerlosen Transportfahrzeuge vorgesehen und entsprechend ausgestattet sowie konfiguriert sein kann, ist es einem Benutzer ermöglicht, auf zahlreiche weitere Maschinendaten zuzugreifen und/oder einzelne Maschinenfunktionen zu steuern, bspw. die fahrerlosen Transportfahrzeuge ebenso jederzeit lokalisieren zu können wie die Formatteile und/oder die Garniturenwagen. Außerdem ist es dem Benutzer dadurch wahlweise ermöglicht, unter Nutzung eines solchen mobilen Endgerätes die Bewegungen der fahrerlosen Transportfahrzeuge zu überwachen oder auch zu steuern.

Zusätzlich kann es von Vorteil sein, wenn weitere Parameter der mit einem Ortungsmodul ausgestatteten Formatteile und/oder der mit einem Ortungsmodul ausgestatteten Garniturenwagen mit Formatteilen erfasst, gespeichert und abrufbar bereitgehalten werden können, wobei es sich bei den weiteren Parametern insbesondere um verschleißrelevante Parameter handeln kann.

Generell bietet die erfindungsgemäß ausgestattete Maschinenkonfiguration die vorteilhafte Option, die mittels Ortungsmodulen lokalisierbaren Formatteile, Garniturenwagen mit Formatteilen und/oder fest verbauten Maschinenteile mitsamt weiteren Parameterdaten für die Teile nicht nur zentral zu erfassen, sondern diese Datenverwaltung auch im Rahmen eines ERP-Systems (ERP: Enterprise-Ressource-Planning), d.h. für eine optimierte Steuerung betrieblicher Abläufe, zu nutzen und hierfür einzusetzen. In diesem Zusammenhang können insbesondere Daten über einen jeweils zu erwartenden fortschreitenden Verschleiß an einzelnen Maschinenteilen ausgewertet und im Rahmen einer Material- und Ersatzbedarfsplanung genutzt werden, um sicherzustellen, dass zu ersetzende Teile jeweils rechtzeitig zur Verfügung stehen und vorzugsweise ohne nennenswerte Verzögerung anstelle eines verschlissenen Bauteils, Formatteils etc. bei der Behälterbehandlungsanlage bzw. der Maschinenkonfiguration verfügbar gehalten und/oder eingebaut werden können.

Als Komponente eines solchen ERP-Systems oder als Abwandlung bietet die erfindungsgemäß ausgestattete Maschinenkonfiguration zudem die vorteilhafte Option, die mittels Ortungsmodulen lokalisierbaren Formatteile, Garniturenwagen mit Formatteilen und/oder fest verbauten Maschinenteile mitsamt weiteren Parameterdaten für die Teile nicht nur zentral zu erfassen, sondern diese Datenverwaltung auch im Rahmen eines MES (MES: Manufacturing Execution System) einzusetzen, d.h. eines entsprechend optimierten Produktionsleitsystems, um damit automatisierte Prozesse im Zusammenhang mit dem Austausch von Formatteilen und/oder von festen Maschinenteilen zu lenken und diese Lenkung zu optimieren.

Beide hier genannten Steuerungssysteme, d.h. das ERP-System als auch das MES können vorzugsweise über Datenschnittstellen die erfindungsgemäße Maschinenkonfiguration mit anderen Unternehmensbereichen koppeln, so dass etwa über die Materialwirtschaft jederzeit ein Ersatzbedarf für verschlissene oder defekte Teile befriedigt werden kann. Zudem kann hierdurch eine umfangreiche Datenübertragung an andere Unternehmensbereiche unterstützt werden, etwa zur statistischen Erfassung von Produktions- und/oder Produktdaten.

Zur Erreichung des oben formulierten Ziels schlägt die vorliegende Erfindung neben der in verschiedenen Ausführungsvarianten oben erläuterten Maschinenkonfiguration weiterhin ein Verfahren zum Lokalisieren von mindestens einem entfernt von einer Behälterbehandlungsanlage befindlichen und der Behälterbehandlungsanlage zugehörigen Formatteil und/oder von mindestens einem entfernt von der Behälterbehandlungsanlage befindlichen und der Behälterbehandlungsanlage zugehörigen Garniturenwagen mit Formatteilen mit den Merkmalen des unabhängigen Verfahrensanspruchs vor.

Bei dem erfindungsgemäßen Verfahren ist vorgesehen, dass sich das mindestens eine Formatteil und/oder der mindestens eine Garniturenwagen mit Formatteilen in ungeordneter Ablage innerhalb eines Aufbewahrungsraumes befinden, und dass das mindestens eine Formatteil und/oder der mindestens eine Garniturenwagen mit Formatteilen jeweils mit einem Ortungsmodul ausgestattet sind, welches das Lokalisieren des Formatteils und/oder des Garniturenwagens mit Formatteilen innerhalb des Aufbewahrungsraumes mittels drahtlos übertragenen Datenaustausches erlaubt.

Der Aufbewahrungsraum kann insbesondere ein räumlich umgrenztes und/oder ein räumlich definiertes Areal sein, das sich in einer definierten räumlichen Beziehung zur Behälterbehandlungsanlage befindet, wobei die definierte räumliche Beziehung insbesondere eine unmittelbare Umgebung mit bestimmbarem maximalem Entfernungsradius zur Behälterbehandlungsanlage meint.

Bei dem erfindungsgemäßen Verfahren kann eine ungeordnete Ablage des mindestens einen Formatteils und/oder des mindestens einen Garniturenwagens mit Formatteilen bspw.
- eine nicht mit definierten Ablageroutinen übereinstimmende Ablage und/oder
- eine fehlerhafte Ablage und/oder
- eine chaotische Ablage und/oder
- eine nachträglich veränderte Ablage
des mindestens einen Formatteils und/oder des mindestens einen Garniturenwagens mit Formatteilen innerhalb des Aufbewahrungsraumes meinen.

Bei einer weiteren Variante des erfindungsgemäßen Verfahrens kann weiterhin ein innerhalb des umgrenzten oder nicht räumlich begrenzten Aufbewahrungsraumes bewegliches und seinen Aufenthalt veränderbares fahrerloses Transportfahrzeug eingesetzt werden, welches die Lokalisierung des jeweiligen Formatteils und/oder des jeweiligen Garniturenwagens mit Formatteilen unterstützen oder ausführen kann.

Das fahrerlose Transportfahrzeug, welches das Formatteil und/oder den Garniturenwagen mit Formatteilen lokalisiert hat, kann sodann das lokalisierte Formatteil und/oder den lokalisierten Garniturenwagen vom Ort seiner Ablage innerhalb des Aufbewahrungsraumes aufnehmen und zur Behälterbehandlungsanlage verbringen, wenn es dort benötigt wird.

Außerdem kann bei einer weiteren Variante des Verfahrens ein weiteres fahrerloses Transportfahrzeug, welches nicht dasjenige ist, welches das Formatteil und/oder den Garniturenwagen mit Formatteilen lokalisiert hat, das lokalisierte Formatteil und/oder den lokalisierten Garniturenwagen vom Ort seiner Ablage innerhalb des [umgrenzten] Aufbewahrungsraumes aufnehmen und zur Behälterbehandlungsanlage verbringen.

Wahlweise können bei dem Verfahren alle mit einem Ortungsmodul ausgestatteten Formatteile und/oder alle mit einem Ortungsmodul ausgestatteten Garniturenwagen mit Formatteilen zentral erfasst und zumindest ihre Ortungsdaten mittels einer zentralen Datenverarbeitung verwaltet, gespeichert und abrufbar bereitgehalten werden.

Außerdem können bei dem Verfahren zumindest die Ortungsdaten der mit einem Ortungsmodul ausgestatteten Formatteile und/oder der mit einem Ortungsmodul ausgestatteten Garniturenwagen mit Formatteilen mittels wenigstens eines mobilen Endgerätes erfasst und/oder verwaltet, gespeichert und abrufbar bereitgehalten werden, insbesondere zur Visualisierung für einen Benutzer des mobilen Endgerätes.

Außerdem können bei einer weiteren Verfahrensvariante weitere Parameter der mit einem Ortungsmodul ausgestatteten Formatteile und/oder der mit einem Ortungsmodul ausgestatteten Garniturenwagen mit Formatteilen erfasst, gespeichert und abrufbar bereitgehalten werden, wobei es sich bei den weiteren Parametern insbesondere um verschleißrelevante Parameter handeln kann.

Es sei an dieser Stelle ausdrücklich erwähnt, dass alle Aspekte und Ausführungsvarianten, die im Zusammenhang mit der erfindungsgemäßen Maschinenkonfiguration mit mindestens einer Behälterbehandlungsanlage erläutert wurden, gleichermaßen Teilaspekte des erfindungsgemäßen Verfahrens zum Lokalisieren von mindestens einem entfernt von einer Behälterbehandlungsanlage befindlichen und der Behälterbehandlungsanlage zugehörigen Formatteil und/oder von mindestens einem entfernt von der Behälterbehandlungsanlage befindlichen und der Behälterbehandlungsanlage zugehörigen Garniturenwagen mit Formatteilen betreffen oder bilden können. Wenn daher an einer Stelle bei der Beschreibung oder auch bei den Anspruchsdefinitionen zur erfindungsgemäßen Maschinenkonfiguration von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Maschinenkonfiguration betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Maschinenkonfiguration.

Schließlich sei an dieser Stelle nochmals klargestellt, dass die Behälterbehandlungsanlage, die definitionsgemäß Bestandteil der erfindungsgemäßen Maschinenkonfiguration sein soll, wahlweise durch eine Verpackungsanlage, durch eine Verpackungsmaschine oder auch durch mehrere solcher Module von Verpackungsanlagen gebildet sein kann.

Der besondere Vorteil der erfindungsgemäßen Maschinenkonfiguration sowie des erfindungsgemäßen Lokalisierungsverfahrens besteht darin, dass ungeordnet abgelegte Formatteile und/oder Garniturenwagen aufgefunden werden können, die sich nicht in einer geordneten Magazinablage befinden müssen, sondern deren genauer Ablageort entweder unbestimmt ist oder die sogar mit unbekanntem Ablageort abgelegt sind und infolgedessen erst gesucht und gefunden werden müssen. Es kann sich dabei um eine chaotische Lagerhaltung in einem Magazin oder außerhalb eines Magazins oder auch um eine Ablage außerhalb der üblichen Definition einer Lagerhaltung handeln.

Sobald die gesuchten Teile lokalisiert und aufgefunden sind, können sie zum gewünschten Einsatzort an der Behälterbehandlungsanlage überführt werden, was gemäß der vorliegenden Erfindung grundsätzlich auf unterschiedlichem Wege erfolgen kann, wofür aber wahlweise ein sog. AGV bzw. ein fahrerloses Transportfahrzeug eingesetzt werden kann, was den Vorteil einer automatisierbaren Suche und Überführung der betreffenden Formatteile oder Garniturenwagen mit Formatteilen zum Einsatz- und Montageort an der Behälterbehandlungsanlage hat.

Grundsätzlich und gemäß der Definition der vorliegenden Erfindung kann sich die Lokalisierbarkeit auch auf entfernte Standorte oder auf andere Maschinenstandorte beziehen, wobei als zu lokalisierende Formatteile bspw. sog. Wechselgarnituren oder generell solche Formatteile in Frage kommen, die im Zusammenhang mit einer Umstellung in der Anlage stehen, insbesondere eine Formatumstellung, etwa für den Transport und die Handhabung größerer oder kleinerer Behälter oder anders geformter Behälter etc.

Die gesuchten Formatteile und/oder Garniturenwagen können mit Hilfe ihres jeweils verbauten Ortungsmoduls nicht nur Informationen liefern und per drahtloser Funkverbindung an einen Sender-Empfänger übertragen, die sich auf den aktuellen Standort des betreffenden Objekts beziehen, sondern können wahlweise zusätzliche Daten bereithalten, die vorzugsweise mittels desselben Ortungsmoduls zusätzlich oder ergänzend übertragen werden können, etwa Parameterdaten aller Art, bspw. solcher, die sich auf die Nutzungsdauer, auf einen fortschreitenden Verschleiß o. dgl. beziehen. Sofern solche Daten mitübertragen werden, lässt sich die erfindungsgemäße Maschinenkonfiguration sowie das erfindungsgemäße Lokalisierungsverfahren in vorteilhafter Weise mit Systemen koppeln, die sich mit Verschleißprognosen, mit einer automatischen Ersatzbeschaffung etc. befassen, so dass die erfindungsgemäße Maschinenkonfiguration sowie das erfindungsgemäße Lokalisierungsverfahren in eine zentral gesteuerte Maschinenumgebung mit umfangreicher zusätzlicher Datenerhebung und einem umfangreicheren Datenaustausch im Zusammenhang mit einer integrierten Material- und Einsatzplanung einbetten lässt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer ersten Ausführungsvariante einer erfindungsgemäßen Maschinenkonfiguration mit einigen ihrer zusammenwirkenden Komponenten.
Fig. 2 zeigt eine schematische Ansicht einer zweiten Ausführungsvariante der erfindungsgemäßen Maschinenkonfiguration mit einigen ihrer zusammenwirkenden Komponenten.

Für gleiche oder gleich wirkende Elemente der Erfindung verwendet die nachfolgende Figurenbeschreibung in der Regel jeweils gleiche Bezugsziffern. Ferner werden der Übersicht halber in vielen Fällen nur solche Bezugsziffern in den einzelnen Figuren verwendet, die für die Beschreibung der jeweiligen Figur erforderlich sind. Die dargestellten Ausführungsformen stellen lediglich Beispiele dar, wie die erfindungsgemäße Maschinenkonfiguration oder das erfindungsgemäße Verfahren ausgestaltet sein können und stellen keine abschließende Begrenzung dar. Auch sind die nachfolgend beschriebenen Merkmale jeweils nicht in engem Zusammenhang mit weiteren Merkmalen des jeweiligen Ausführungsbeispiels zu verstehen, sondern können jeweils im allgemeinen Zusammenhang vorgesehen sein bzw. hierfür Verwendung finden.

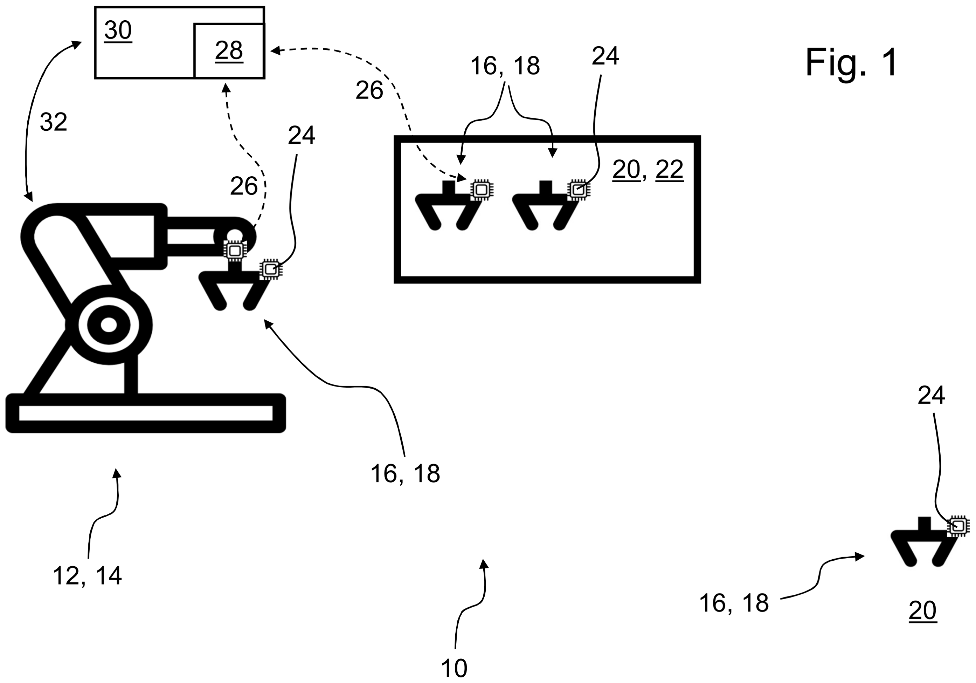

Die schematische Übersichtsdarstellung der Fig. 1 zeigt eine Ausgestaltungsvariante einer erfindungsgemäßen Maschinenkonfiguration 10 mit einigen ihrer wichtigsten Komponenten. Die gezeigte Maschinenkonfiguration 10 lässt einen Handhabungsroboter 14 erkennen, der eine Behälterbehandlungsanlage 12 repräsentieren soll, wobei eine typische Maschinenkonfiguration 10 mehrere solcher Behälterbehandlungsanlagen 12 oder miteinander in Zusammenwirkung stehende Module einer solchen Anlage 12 umfasst. Allerdings zeigt die Fig. 1 lediglich einen Teil einer solchen Anlage 12 oder Behälterbehandlungsanlage 12, repräsentiert durch den einzelnen Handhabungsroboter 14.

Der Handhabungsroboter 14 oder ein anderes Maschineteil der Behälterbehandlungsanlage 12 umfasst mindestens ein Formatteil 16, das im vorliegenden Ausführungsbeispiel durch einen Greiferkopf 18 gebildet sein kann, der bspw. zur Handhabung, zur Erfassung und/oder zum Umpositionieren von hier nicht gezeigten Artikeln, Behältern oder anderen Stückgütern wie bspw. Gebinden oder Verpackungseinheiten mit mehreren zusammengefassten Behältern vorgesehen und entsprechend ausgebildet sein kann.

Bei dem durch den Greiferkopf 18 gebildeten Formatteil 16 handelt es sich um ein auswechselbares Formatteil 16, d.h. insbesondere um ein behälterspezifisches Formatteil 16, das je nach der Behältergröße oder Behälterkontur, die in einer aktuellen Betriebsphase der Maschinenkonfiguration 10 mittels der Behälterbehandlungsanlage 12, hier gebildet durch den Handhabungsroboter 14, gehandhabt werden soll. So ist es bspw. denkbar, dass der Greiferkopf 18 in einer ersten Betriebsphase jeweils Gruppierungen von zwanzig kleineren Behältern ergreifen und umsetzen soll, während ein anders dimensionierter Greiferkopf 18 in einer zweiten Betriebsphase Gruppierungen von zwölf größeren Behältern ergreifen und umsetzen soll. Somit handelt es sich bei den für unterschiedliche Aufgaben vorgesehenen Greiferköpfen 18 für die verschiedenen Betriebsphasen jeweils um unterschiedliche Formatteile 16, die vor einer Umstellung der Anlage 12 auszutauschen und die Anlage 12 somit an die jeweils verarbeiteten Behälter anzupassen ist.

Da zahlreiche unterschiedliche Handhabungs-, Transport- und/oder Verarbeitungssituationen für die unterschiedlichsten Behälterbehandlungsanlagen 12 und/oder Unterbaugruppen solcher Anlagen 12 denkbar sind, und da die Maschinenkonfiguration 10 für einen Betrieb von zwei oder mehr Betriebsphasen vorgesehen sein kann, kann es notwendig sein, mehrere oder zahlreiche unterschiedliche Formatteile 16 für einen Austausch gegen jeweils an der Behälterbehandlungsanlage 12 befindliche andere Formatteile 16 bereitzuhalten, und dies insbesondere in einem hierfür geeigneten Aufbewahrungsraum 20, der bspw. durch ein Magazin 22 zur Aufbewahrung und Bereithaltung mehrerer Formatteile 16 gebildet sein kann.

Wie nachfolgend noch im Detail zu erläutern sein wird, muss dieser geeignete Aufbewahrungsraum 20 zur Aufbewahrung und Bereithaltung einzelner oder mehrerer Formatteile 16 allerdings nicht durch ein einzelnes Magazin 22 und auch nicht durch einen bestimmten Ort definiert sein, sondern kann mehrere einzelne Ablageplätze für Formatteile 16 umfassen, die sich an voneinander entfernten Orten befinden können. Grundsätzlich kann als Aufbewahrungsraum 20 im Sinne der hiesigen Definition jeder Ort betrachtet werden, an dem sich ein nicht mit der Behälterbehandlungsanlage 12 verbundenes und insbesondere zumindest geringfügig von dieser entferntes Formatteil 16 befindet.

Bei der in Fig. 1 gezeigten Maschinenkonfiguration 10, die ein Ausführungsbeispiel für eine erfindungsgemäße Maschinenkonfiguration 10 liefert, ist zudem vorgesehen, dass sich die Formatteile 16 und/oder die Garniturenwagen mit Formatteilen 16 in ungeordneter Ablage innerhalb des Aufbewahrungsraumes 20 befinden können. Diese ungeordnete Ablage betrifft auch das erwähnte Magazin 22, sofern der Aufbewahrungsraum 20 durch ein solches Magazin 22 gebildet ist oder sofern zumindest Teile des Aufbewahrungsraumes 20 durch ein Magazin 22 gebildet sind.

Anstelle einzeln gehandhabter Formatteile 16 oder zusätzlich zu einzeln zu handhabender Formatteile 16 können zudem der Behälterbehandlungsanlage 12 zugehörige Garniturenwagen mit Formatteilen 16 vorgesehen sein, die insbesondere zur leichteren Handhabung schwerer und/oder voluminöser Formatteile 16 zwischen dem Aufbewahrungsraum 20 und der Behälterbehandlungsanlage 12 bewegt werden können, insbesondere mittels rollender Fortbewegung. Sofern es sich bei den Greiferköpfen 18 um schwere Bauteile handelt, die sich nicht zur Ablage auf einer undefinierten Unterlage eignen, kann es sinnvoll sein, die Greiferköpfe 18 bei Nichtgebrauch in solchen Garniturenwagen unterzubringen und diese bei Bedarf zum Handhabungsroboter 14 zu überführen, damit ein dort angekoppelter Greiferkopf 18 gegen einen mittels Garniturenwagen angelieferten anderen Greiferkopf 18 ausgetauscht werden kann.

Im vorliegenden Ausführungsbeispiel wurde jedoch auf die zeichnerische Darstellung solcher Garniturenwagen verzichtet, weil sie keine Abwandlung des hier betrachteten erfinderischen Prinzips darstellen, sondern lediglich eine Ausgestaltungsvariante für die Formatteile 16.

Der Aufbewahrungsraum 20 dient somit im Wesentlichen der temporären Ablage des mindestens einen Formatteils 16 und/oder des mindestens einen Garniturenwagens mit Formatteilen 16, da diese im Aufbewahrungsraum 20 für eine spätere Nutzung, bspw. zur Handhabung eines anderen Produkts, einer anderen Behältergröße etc. aufbewahrt und bereitgehalten werden.

Definitionsgemäß dürfen sich die austauschbaren Formatteile 16, gebildet bspw. durch austauschbare Greiferköpfe 18, in ungeordneter Ablage innerhalb eines Magazins 22, innerhalb mehrerer Magazine 22 oder auch innerhalb eines nicht exakt lokalisierten oder lokalisierbaren Aufbewahrungsraumes 20, ggf. auch innerhalb eines durch mehrere voneinander entfernte Ablageorte eines Aufbewahrungsraumes 20 befinden, was einen Zugriff auf die jeweils benötigten Formatteile 16 für eine bevorstehende Umrüstung der Behälterbehandlungsanlage 12 im Zusammenhang mit einem geänderten Betriebsmodus der Maschinenkonfiguration 10 erschweren oder sogar unmöglich machen kann, insbesondere wenn sich das benötigte Formatteil 16 nicht am erwarteten Ablageort befindet und somit das für eine Ankoppelung an der Anlage 12 benötigte Formatteil 16 oder der zur Ankoppelung am Handhabungsroboter 14 benötigte Greiferkopf 18 nicht auffindbar ist und damit nicht zur Verfügung gestellt werden kann.

Damit trotz der erfindungsgemäß zugelassenen ungeordneten Ablage innerhalb des Aufbewahrungsraumes 20 ein Auffinden der verschiedenen Formatteile 16 und/oder der Garniturenwagen mit den Formatteilen 16 sowie ein Zugriff darauf ermöglicht ist, sind die Formatteile 16 jeweils mit Ortungsmodulen 24 ausgestattet, welche das Lokalisieren jedes einzelnen Formatteils 16 innerhalb des Aufbewahrungsraumes 20 mittels drahtlos übertragenem Datenaustausch erlaubt. Grundsätzlich ist es sinnvoll, jedes einzelne Formatteil 16, das für einen Austausch gegen ein an der Anlage 12 befindliches Formatteil 16 in Frage kommt, mit einem solchen Ortungsmodul 24 auszustatten, sofern nicht sichergestellt werden kann, dass sich das nicht mit der Anlage 12 gekoppelte Formatteil 16 an einem definierten und bekannten Ablageort innerhalb des Aufbewahrungsraumes 20 oder des Magazins 22 befindet.

Die jeweils an den Formatteilen 16 angeordneten Ortungsmodule 24 können durch passiv oder aktiv funktionierende Module gebildet sein, die in einen Datenaustausch 26 mit einer Gegenstelle wie einem kombinierten Sender-Empfänger 28 treten können, wie dies durch die unterbrochen linierten Verbindungspfeile in Fig. 1 gezeigt ist. Der Sender-Empfänger 28 bzw. eine übergeordnete Steuerungszentrale 30 befindet sich außerdem in einer Signalverbindung 32 mit der mindestens einen Behälterbehandlungsanlage 12 bzw. mit dem gezeigten Handhabungsroboter 14, wobei die übergeordnete Steuerungszentrale 30 insbesondere die Steuerungsaufgaben im Zusammenhang mit der Koordinierung der vorzunehmenden Formatteilewechsel zu übernehmen hat.

Die Ortungsmodule 24 und der Sender-Empfänger 28 können die unterschiedlichsten Techniken nutzen, so dass der Datenaustausch 26 bspw. mittels RFID-Technik stattfinden kann, bei der die Formatteile 16 jeweils mit einem passiven Transponder ausgestattet sein können, dessen Informationen von einem entfernten Lesegerät am Sender-Empfänger 28 ausgelesen und zur Gewinnung von Ortungsdaten ausgewertet werden können. Um größere Entfernungen zu überwinden, können wahlweise auch aktive Transponder mit eigener Energieversorgung eingesetzt werden.

Grundsätzlich kommen auch zahlreiche andere Ortungstechniken in Frage, die in den Ortungsmodulen 24 eingesetzt werden können, so etwa eine WLAN-basierte Ortung, die ergänzend mit GPS-Techniken arbeiten kann. Hierbei können wechselnde Feldstärken von empfangenen WLAN-Signalen ausgewertet werden. Auch der etablierte Bluetooth-Standard kann als Grundlage für die Ortung der Formatteile 16 oder Garniturenwagen dienen. Als Ortungsmodule 24 kommen bspw. auch solche Geräte in Frage, die ähnlich wie Schlüsselfinder arbeiten und die einen Datenaustausch 26 mittels der sog. Ultrabreitband-Technik ermöglichen.

Je nach verwendeter Technik ermöglicht der drahtlose Datenausch 26 zwischen den an den Formatteilen 16 angeordneten Ortungsmodulen 24 und dem Sender-Empfänger 28 eine Lokalisierung der betreffenden Formatteile 16 innerhalb größerer Areale, d.h. der Aufbewahrungsraum 20 kann Ablageorte der Formatteile 16 mit Entfernungen von mehreren hundert Metern oder auch darüber hinaus erlauben und abdecken.

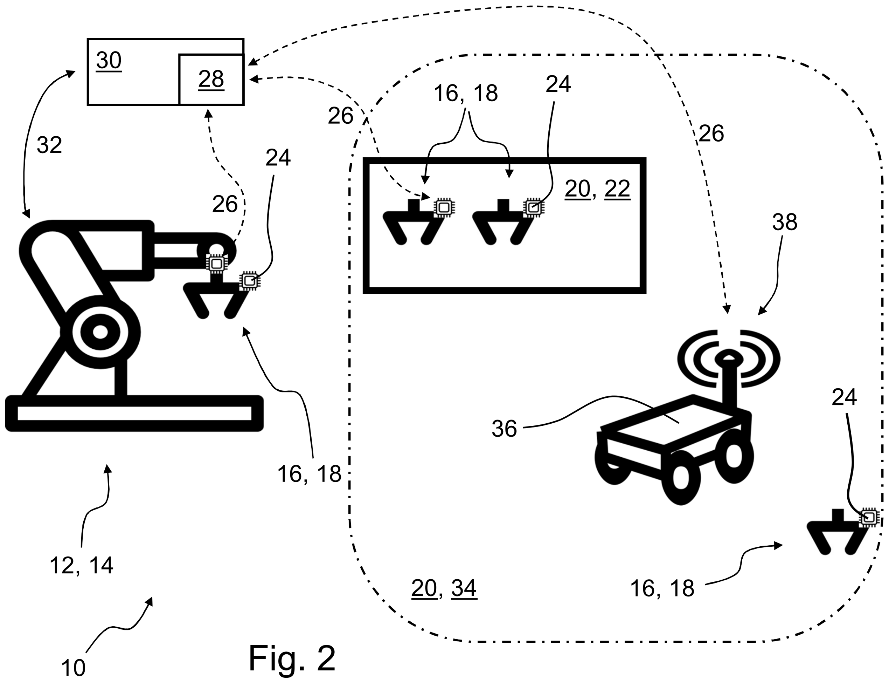

Die schematische Darstellung der Fig. 2 zeigt zudem eine weitere vorteilhafte Ausführungsvariante der erfindungsgemäßen Maschinenkonfiguration 10, bei der innerhalb eines hier als umgrenztes Areal 34 undefinierter Größe gekennzeichneten Aufbewahrungsraumes 20 ein fahrerloses Transportfahrzeug 36 zum Einsatz kommen kann. Wahlweise können auch mehrere solcher fahrerlosen Transportfahrzeuge 36 vorgesehen sein, die innerhalb des umgrenzten Areals 34, welches den Aufbewahrungsraum 20 bildet, zum Einsatz kommen.

Somit kann innerhalb des Areals 34 bzw. des Aufbewahrungsraumes 20 mindestens ein bewegliches und seinen Aufenthalt veränderbares fahrerloses Transportfahrzeug 36 (oder AGV) eingesetzt werden, welches die Lokalisierung des jeweiligen Formatteils 16 durch Kommunikation und Datenaustausch 26 mit dem Sender-Empfänger 28 und/oder durch direkte Kommunikation mit dem jeweiligen Ortungsmodul 24 des jeweiligen Formatteils 16 ermöglichen kann. Somit kann sich das fahrerlose Transportfahrzeug 36 wahlweise auf Grundlage der vom Sender-Empfänger 28 zur Verfügung gestellten Lagedaten dem gesuchten und bereits lokalisierten Formatteil 16 annähern und dieses nach Erreichen seines Ablageorts aufnehmen, um es anschließend zum vorgesehenen Bestimmungsort zu verbringen, normalerweise zur Behälterbehandlungsanlage 12 oder zum Handhabungsroboter 14.

Der Aufbau der Maschinenkonfiguration 10, wie er in Fig. 2 gezeigt ist, entspricht im Übrigen dem Aufbau der Maschinenkonfiguration 10 gemäß Fig. 1, wobei sich die Maschinenkonfiguration 10 gemäß Fig. 2 im Wesentlichen durch die Einsatzmöglichkeit mindestens eines fahrerlosen Transportfahrzeuges 36, insbesondere durch die Verwendung mehrerer solcher fahrerlosen Transportfahrzeuge 36 unterscheidet.

Das mindestens eine fahrerlose Transportfahrzeug 36 verfügt über eine Datenschnittstelle 38 zur Herstellung einer drahtlosen Datenverbindung zum Sender-Empfänger 28, der mit der Steuerungszentrale 30 gekoppelt ist, und zur Ermöglichung eines drahtlosen Datenaustauschs 26 mit dem Sender-Empfänger 28, so dass das fahrerlose Transportfahrzeug 36 von der Steuerungszentrale 30 zu einem lokalisierten Formatteil 16 dirigiert werden kann. Sinnvollerweise dient das fahrerlose Transportfahrzeug 36 außerdem dem Materialtransport, d.h. der Aufnahme und des Transports des Formatteils 16 zum Einsatzort, nämlich der Anlage 12 und/oder dem Handhabungsroboter 14.

Vorzugsweise verfügt das fahrerlose Transportfahrzeug 36 über geeignete Lastaufnahmemittel, gebildet bspw. durch einen Greifarm oder geeignete Koppelmechanismen, um das Formatteil 16 vom Ablageort zum Einsatzort verbringen zu können. So kann das fahrerlose Transportfahrzeug 36 bspw. mit aktiven Lastaufnahmemitteln ausgestattet sein, damit die beförderten Formatteile 16 auf einen Laderaum des Fahrzeuges 36 übernommen und von dort abgenommen werden können, oder damit das fahrerlose Transportfahrzeug 36 mit einem Garniturenwagen gekoppelt werden kann, um diesen zum Bestimmungsort zu ziehen.

Gemäß einer sinnvollen Ausführungsvariante kann das fahrerlose Transportfahrzeug 36 auch direkt mit den Ortungsmodulen 24 der zu lokalisierenden Formatteile 16 kommunizieren und in Datenaustausch 26 mit diesen treten, so dass direkte Funkverbindungen zwischen dem an der Steuerungszentrale 30 befindlichen Sender-Empfänger 28 und den Ortungsmodulen 24 der Formatteile 16 nicht erforderlich sind. Die Funkverbindungen können in diesem Fall ausschließlich zwischen den Ortungsmodulen 24 der Formatteile 16 und dem mindestens einen fahrerlosen Transportfahrzeug 36 bestehen, wobei dieses zwingend in einem Datenaustausch 26 mit der Steuerungszentrale 30 bzw. mit deren Sender-Empfänger 28 stehen muss.

Wahlweise kann bei der erfindungsgemäßen Maschinenkonfiguration 10 ein weiteres fahrerloses Transportfahrzeug 36 vorhanden sein und eingesetzt werden, welches nicht dasjenige ist, welches das Formatteil 16 und/oder den Garniturenwagen mit Formatteilen 16 lokalisiert hat. Das weitere fahrerlose Transportfahrzeug kann dann zur Aufnahme und zur Verbringung des vom anderen fahrerlosen Transportfahrzeug 36 lokalisierten Formatteils 16 und/oder des lokalisierten Garniturenwagens mit Formatteilen 16 vom Ort seiner Ablage innerhalb des Aufbewahrungsraumes 20 zur Behälterbehandlungsanlage 12 vorbereitet und entsprechend ausgestattet sein.

Ein solches zusätzliches fahrerloses Transportfahrzeug 36 kann ggf. auch als Relaisstation zur Erhöhung der Suchreichweite genutzt werden, da davon ausgegangen werden kann, dass die üblicherweise eingesetzten Ortungsmodule 24 eine technisch bedingte begrenzte Reichweite haben. Somit kann im Einzelfall dem Nachteil dieser technisch bedingten begrenzten Reichweite, die den Datenaustausch 26 zwischen einem Sender-Empfänger 28 und den jeweiligen Ortungsmodulen 24 dadurch begegnet werden, dass mittels des Einsatzes von reichweitenverlängernden fahrerlosen Transportfahrzeugen 36 auch weiter entfernt von einem ortsfesten Sender-Empfänger 28 abgelegte Formatteile 16 und/oder Garniturenwagen mit Formatteilen 16 lokalisiert und gefunden werden können.

Wie oben schon erwähnt, ist der durch das umgrenzte Areal 34 definierte Aufbewahrungsraum 20 gemäß Fig. 2 lediglich beispielhaft zu verstehen, denn grundsätzlich kann der Aufbewahrungsraum 20 als unbegrenzter Raum verstanden werden, in dem die verschiedenen Formatteile 16 mehr oder weniger ungeordnet, ggf. auch in chaotischer Ablage verteilt, abgelegt sein können. Insbesondere bei einem Einsatz eines fahrerlosen Transportfahrzeuges 36 als reichweitenverlängernde Relaisstation oder beim Einsatz mehrerer solcher fahrerlosen Transportfahrzeuge 36 können auch große Areale abgedeckt werden, in denen sich Formatteile 16 befinden können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Maschinenkonfiguration
- 12: Behälterbehandlungsanlage, Anlage
- 14: Handhabungsroboter
- 16: Formatteil
- 18: Greiferkopf
- 20: Aufbewahrungsraum
- 22: Magazin
- 24: Ortungsmodul
- 26: Datenaustausch
- 28: Sender-Empfänger, Gegenstelle
- 30: Steuerungszentrale
- 32: Signalverbindung
- 34: umgrenztes Areal
- 36: fahrerloses Transportfahrzeug
- 38: Datenschnittstelle

## Patentansprüche

1. Maschinenkonfiguration (10), umfassend wenigstens eine Behälterbehandlungsanlage (12) und mindestens ein der Behälterbehandlungsanlage (12) zugehöriges Formatteil (16) und/oder mindestens einen der Behälterbehandlungsanlage zugehörigen Garniturenwagen mit Formatteilen (16) sowie einen Aufbewahrungsraum (20) zur temporären Ablage des mindestens einen Formatteils (16) und/oder des mindestens einen Garniturenwagens mit Formatteilen (16),
- wobei sich das mindestens eine Formatteil (16) und/oder der mindestens eine Garniturenwagen mit Formatteilen (16) in ungeordneter Ablage innerhalb des Aufbewahrungsraumes (20) befinden,
- und wobei das mindestens eine Formatteil (16) und/oder der mindestens eine Garniturenwagen mit Formatteilen (16) jeweils mit einem Ortungsmodul (24) ausgestattet sind, welches das Lokalisieren des Formatteils (16) und/oder des Garniturenwagens mit Formatteilen (16) innerhalb des Aufbewahrungsraumes (20) mittels drahtlos übertragenen Datenaustausches (26) erlaubt.

2. Maschinenkonfiguration (10) nach Anspruch 1, bei welcher der Aufbewahrungsraum (20) durch ein räumlich umgrenztes und/oder ein räumlich definiertes Areal (34) gebildet ist, das sich in einer definierten räumlichen Beziehung zur Behälterbehandlungsanlage (12) befindet, wobei die definierte räumliche Beziehung insbesondere eine unmittelbare Umgebung mit bestimmbarem maximalem Entfernungsradius zur Behälterbehandlungsanlage (12) ist.

3. Maschinenkonfiguration (10) nach Anspruch 1 oder 2, welche weiterhin mindestens ein innerhalb des Aufbewahrungsraumes (20) bewegliches und seinen Aufenthalt veränderbares fahrerloses Transportfahrzeug (36) umfasst, welches die Lokalisierung des jeweiligen Formatteils (16) und/oder des jeweiligen Garniturenwagens mit Formatteilen (16) unterstützen oder ausführen kann.

4. Maschinenkonfiguration (10) nach Anspruch 3, bei welcher das fahrerlose Transportfahrzeug (36), welches ein bestimmtes Formatteil (16) und/oder einen bestimmten Garniturenwagen mit Formatteilen (16) lokalisiert, zur Aufnahme des lokalisierten Formatteils (16) und/oder des lokalisierten Garniturenwagens mit Formatteilen (16) vom Ort seiner Ablage innerhalb des Aufbewahrungsraumes (20) und zur Verbringung des Formatteils (16) und/oder des Garniturenwagens mit Formatteilen (16) zur Behälterbehandlungsanlage (12) vorbereitet und entsprechend ausgestattet ist.

5. Maschinenkonfiguration (10) nach Anspruch 3 oder 4, bei welcher ein weiteres fahrerloses Transportfahrzeug (36), welches nicht dasjenige ist, welches das Formatteil (16) und/oder den Garniturenwagen mit Formatteilen (16) lokalisiert hat, zur Aufnahme des vom anderen fahrerlosen Transportfahrzeug (36) lokalisierten Formatteils (16) und/oder des lokalisierten Garniturenwagens mit Formatteilen (16) vom Ort seiner Ablage innerhalb des Aufbewahrungsraumes (20) und zur Verbringung des Formatteils (16) oder des Garniturenwagens mit Formatteilen (16) zur Behälterbehandlungsanlage (12) vorbereitet und entsprechend ausgestattet ist.

6. Maschinenkonfiguration (10) nach einem der Ansprüche 1 bis 5, bei welcher eine Steuerungszentrale (30) mit zentraler Datenverarbeitung zur zentralen Erfassung, Verwaltung, Speicherung und/oder Steuerung zumindest der Ortungsdaten zumindest einiger, vorzugsweise aller mit einem Ortungsmodul (24) ausgestatteten Formatteile (16) und/oder einiger, vorzugsweise aller mit einem Ortungsmodul (24) ausgestatteten Garniturenwagen mit Formatteilen (16) vorgesehen ist.

7. Maschinenkonfiguration (10) nach einem der Ansprüche 1 bis 6, die mit wenigstens einem mobilen Endgerät koppelbar ist, welches zur Erfassung, Verwaltung, Speicherung und/oder zur Bereitstellung zumindest der Ortungsdaten der mit einem Ortungsmodul (24) ausgestatteten Formatteile (16) und/oder der mit einem Ortungsmodul (24) ausgestatteten Garniturenwagen mit Formatteilen (16) vorgesehen und entsprechend ausgestattet sowie konfiguriert ist.

8. Verfahren zum Lokalisieren von mindestens einem entfernt von einer Behälterbehandlungsanlage (12) befindlichen und der Behälterbehandlungsanlage (12) zugehörigen Formatteil (16) und/oder von mindestens einem entfernt von der Behälterbehandlungsanlage (12) befindlichen und der Behälterbehandlungsanlage (12) zugehörigen Garniturenwagen mit Formatteilen (16),
- wobei sich das mindestens eine Formatteil (16) und/oder der mindestens eine Garniturenwagen mit Formatteilen (16) in ungeordneter Ablage innerhalb eines Aufbewahrungsraumes (20) befinden,
- und wobei das mindestens eine Formatteil (16) und/oder der mindestens eine Garniturenwagen mit Formatteilen (16) jeweils mit einem Ortungsmodul (24) ausgestattet sind, welches das Lokalisieren des Formatteils (16) und/oder des Garniturenwagens mit Formatteilen (16) innerhalb des Aufbewahrungsraumes (20) mittels drahtlos übertragenen Datenaustausches (26) erlaubt.

9. Verfahren nach Anspruch 8, bei dem der Aufbewahrungsraum (20) ein räumlich umgrenztes und/oder ein räumlich definiertes Areal (34) ist, welches sich in einer definierten räumlichen Beziehung zur Behälterbehandlungsanlage (12) befindet, wobei die definierte räumliche Beziehung insbesondere eine unmittelbare Umgebung mit bestimmbarem maximalem Entfernungsradius zur Behälterbehandlungsanlage (12) meint.

10. Verfahren nach Anspruch 8 oder 9, bei dem eine ungeordnete Ablage des mindestens einen Formatteils (16) und/oder des mindestens einen Garniturenwagens mit Formatteilen (16)
- eine nicht mit definierten Ablageroutinen übereinstimmende Ablage und/oder
- eine fehlerhafte Ablage und/oder
- eine chaotische Ablage und/oder
- eine nachträglich veränderte Ablage
des mindestens einen Formatteils (16) und/oder des mindestens einen Garniturenwagens mit Formatteilen (16) innerhalb des Aufbewahrungsraumes (20) bedeuten oder meinen kann.

11. Verfahren nach einem der Ansprüche 8 bis 10, bei dem weiterhin mindestens ein innerhalb des Aufbewahrungsraumes (20) bewegliches und seinen Aufenthalt veränderbares fahrerloses Transportfahrzeug (36) vorgesehen ist, welches die Lokalisierung des jeweiligen Formatteils (16) und/oder des jeweiligen Garniturenwagens mit Formatteilen (16) unterstützen oder ausführen kann.

12. Verfahren nach Anspruch 11, bei dem das fahrerlose Transportfahrzeug (36), welches das Formatteil (16) und/oder den Garniturenwagen mit Formatteilen (16) lokalisiert hat, das lokalisierte Formatteil (16) und/oder den lokalisierten Garniturenwagen vom Ort seiner Ablage innerhalb des Aufbewahrungsraumes (20) aufnimmt und zur Behälterbehandlungsanlage (12) verbringt.

13. Verfahren nach Anspruch 11, bei dem ein weiteres fahrerloses Transportfahrzeug (36), welches nicht dasjenige ist, welches das Formatteil (16) und/oder den Garniturenwagen mit Formatteilen (16) lokalisiert hat, das lokalisierte Formatteil (16) und/oder den lokalisierten Garniturenwagen vom Ort seiner Ablage innerhalb des Aufbewahrungsraumes (20) aufnimmt und zur Behälterbehandlungsanlage (12) verbringt.

14. Verfahren nach einem der Ansprüche 8 bis 13, bei dem alle mit einem Ortungsmodul (24) ausgestatteten Formatteile (16) und/oder alle mit einem Ortungsmodul (24) ausgestatteten Garniturenwagen mit Formatteilen (16) zentral erfasst und zumindest ihre Ortungsdaten mittels einer zentralen Datenverarbeitung verwaltet, gespeichert und abrufbar bereitgehalten werden können.

15. Verfahren nach einem der Ansprüche 8 bis 14, bei dem zumindest die Ortungsdaten der mit einem Ortungsmodul (24) ausgestatteten Formatteile (16) und/oder der mit einem Ortungsmodul (24) ausgestatteten Garniturenwagen mit Formatteilen (16) mittels wenigstens eines mobilen Endgerätes erfasst und/oder verwaltet, gespeichert und abrufbar bereitgehalten werden können, insbesondere zur Visualisierung für einen Benutzer des mobilen Endgerätes.

16. Verfahren nach Anspruch 14 oder 15, bei dem weitere Parameter der mit einem Ortungsmodul (24) ausgestatteten Formatteile (16) und/oder der mit einem Ortungsmodul (24) ausgestatteten Garniturenwagen mit Formatteilen (16) erfasst, gespeichert und abrufbar bereitgehalten werden können, wobei es sich bei den weiteren Parametern insbesondere um verschleißrelevante Parameter handeln kann.
